(19) Europäisches Patentamt
European Patent Office
Office européen des brevets

(11) **EP 4 207 000 A1**

(12) **EUROPEAN PATENT APPLICATION**

(43) Date of publication:
**05.07.2023 Bulletin 2023/27**

(21) Application number: **22150208.1**

(22) Date of filing: **04.01.2022**

(51) International Patent Classification (IPC):
**G06N 3/08** *(2023.01)*       **B60W 60/00** *(2020.01)*
**G05B 13/02** *(2006.01)*       **G06N 3/04** *(2023.01)*

(52) Cooperative Patent Classification (CPC):
**G05B 13/0265; B60W 60/0015; G06N 3/0442;**
**G06N 3/045; G06N 3/09;** G06N 3/092

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Siemens Aktiengesellschaft**
**80333 München (DE)**

(72) Inventor: **The designation of the inventor has not yet been filed**

(74) Representative: **Siemens Patent Attorneys**
**Postfach 22 16 34**
**80506 München (DE)**

(54) **COMPUTER-IMPLEMENTED METHOD FOR CORRECTING AT LEAST ONE MODEL OUTPUT OF A FIRST TRAINED MACHINE LEARNING MODEL**

(57)     The invention is directed to a computer-implemented method for correcting at least one model output of a first trained machine learning model, comprising the steps: a. Providing the at least one model output of the first trained machine learning model; wherein the first trained machine learning model is configured for determining the at least one model output comprising at least one control parameter or at least one motion parameter for controlling a technical unit or a component of the technical unit; b. Verifying the at least one model output using at least one acceptance test resulting in at least one test verdict regarding a fail or a pass of the at least one model output; wherein the at least one test verdict comprises at least one indication about whether the at least one model output has passed or failed the at least one acceptance test and at least one indication about a deviation of the at least one model output from at least one expected output; c. determining at least one correction parameter using a second trained machine learning model based on the at least one test verdict and the at least one model output, if the first trained machine learning model fails the at least one acceptance test; d. adjusting the at least one model output of the first trained machine learning model by applying the at least one correction parameter on the at least one model output; and e. providing the at least one adjusted output as at least one corrected model output.

Further, the invention relates to a computer program product, a technical system and a correction module.

## FIG 1

**Description**

1. Technical field

The present invention relates to a computer-implemented method for correcting at least one model output of a first trained machine learning model. Further, the invention relates to a corresponding computer program product, a corresponding technical system and a correction module.

2. Prior art

Artificial Intelligence ("AI") systems, such as machine learning models, are known from the prior art. The AI systems are software programs whose behavior is learned from data instead of being explicitly programmed. The learning process is called "training" which requires plenty of data and significant computational resources. Thereby, the trained AI system solves a specific task for which it was trained, such as prediction of system properties or anomalies. Unlike conventional software, the learned behavior of the AI systems highly depends on the data including the parameters used during training, namely training data.

For example, the Adaptive Simplex Architecture ("ASA") uses a supervised learning model to compute e.g. robot motion plans in real time. The Neural Simplex Architecture ("NSA") uses reinforcement learning models to compute control parameters e.g. for autonomous vehicles.

The performance of an AI system will be high when the training data is a representative sample of the data on which the AI system will be applied later in the field. However, in the real-world scenarios domain drifts or domain shifts are commonly encountered. Domain drift means that the distribution shifts between training and test or application data. It is common that a trained AI system performs well after training and that its performance degrades over time as in-field data increasingly differs from the original training data.

Referring to the exemplary NSA, in case that the model output of a High Performance Controller ("HPC") lies outside a predefined safe region, a decision logic switches control from the HPC to a secondary, high-assurance controller ("HAC"). The HAC is in operation until the underlying machine learning model used as HPC is retrained. Thereby, the model output is applicable or used for controlling a technical unit or a component of the technical unit, such as an industrial robot, an industrial plant or an autonomous vehicle. The model output can be equally referred to as control output.

The disadvantage is that the required retraining of the machine learning model is complex and time consuming. Hence, prior art solutions suggest to run the suboptimal HAC over longer time periods, resulting in unreliable model outputs and hence an unreliable control of the technical unit or component of the technical unit.

Referring to the exemplary ASA, the control continuously switches between HPC and HAC, depending on the reliability of the machine learning model used as HPC. Hence, the model output of the ASA, such as trajectory plan, steering or brakes action can also be suboptimal in terms of e.g. (a) energy and material consumption because the HAC is used in up to 1% of the control cycles; and (b) stability because the HPC and HAC use different control approaches.

The unreliable i.e. unsmooth and/or unstable model outputs, are essential and used for the control of the technical unit. This incorrect control often causes severe safety hazards during operation, such as abrupt braking and/or changes of the direction of an autonomous vehicle. Further negative impacts are e.g. a decreased quality, throughput and/or availability of manufactured products in manufacturing processes of industrial plants. In the worst case, the impacts even result in personal harms, such as accidents by the incorrect control of the autonomous vehicle.

There is a need that the AI models deployed and operated, especially for control are "industrially-graded". This means that AI models have to be reliable and robust even when the conditions around their application scenarios may change, in order to avoid such negative impacts and personal harms.

It is therefore an objective of the invention to provide a computer-implemented method for correcting at least one model output of a first trained machine learning model in an efficient and a reliable manner.

3. Summary of the invention

This problem is according to one aspect of the invention solved by a computer-implemented method for correcting at least one model output of a first trained machine learning model comprising the steps:

a. Providing the at least one model output of the first trained machine learning model; wherein
the first trained machine learning model is configured for determining the at least one model output comprising at least one control parameter or at least one motion parameter for controlling a technical unit or a component of the technical unit;

b. Verifying the at least one model output using at least one acceptance test resulting in at least one test verdict regarding a fail or a pass of the at least one model output; wherein

the at least one test verdict comprises at least one indication about whether the at least one model output has passed or failed the at least one acceptance test and at least one indication about a deviation of the at least one model output from at least one expected output;

c. determining at least one correction parameter using a second trained machine learning model based on the at least one test verdict and the at least one model output, if the first trained machine learning model fails the at least one acceptance test;

d. adjusting the at least one model output of the first trained machine learning model by applying the at least one correction parameter on the at least one model output; and

e. providing the at least one adjusted output as at least one corrected model output.

Accordingly, the invention is directed to a computer-implemented method for correcting the at least one model output of the first trained machine learning model. Therefore, first the at least one model output is provided as input for the verification and other subsequent method steps.

The input in step a. can be received via one or more input interfaces. The first trained machine learning model is configured for determining or predicting the at least one model output. In other words, the model output is the result of the first machine learning model. The model output comprises a control parameter or a motion parameter. This parameter is applicable or used for controlling the technical unit or the component of the technical unit, such as an industrial robot, an industrial plant or an autonomous vehicle. The technical unit can also be designed as any other Safety Control System (SCS).

Additionally, the model output can comprise further data or parameters. In addition to the model output, further data and/or the first machine learning model can be provided as well. Hence, the input can be extended with further information.

In the next step, the at least one model output is checked in view of failing or passing the at least one acceptance test. This check results in the at least one test verdict.

The test verdict gives an indication about the fail or the pass of the at least one model output. In other words, the model output can either pass or fail one or more acceptance tests.

Additionally to this first indication, the at least one test verdict comprises at least one further second indication. The second indication is directed to the deviation of the at least one model output from the at least one expected output. In other words, the test verdict indicates how far the model output is apart or off from an expected safe region or an expected safe zone. The safe region or safe zone can be predefined. The second indication is preferably designed as a quantitative parameter comprising said indication.

The test verdict can comprise additional quantitative parameters and/or other information as input for the next steps.

In the next step the at least one correction parameter is determined. Therefore, the second trained machine learning model is applied on the provided input, namely the model output and the test verdict.

This correction or adjustment step is solely performed and hence the second trained machine learning model is applied in the case that the first trained machine learning model fails the acceptance test. The advantage of the correction is that the model output is pushed back into a safe region or safe zone. The safe region or safe zone can be interpreted as permissive envelope or recoverable region, which can be determined by the acceptance or safety gate.

In the other case of a pass of the model output, this correction step is not required and skipped. The model output has passed the acceptance test in this case and is accepted as correct model output. No further adjustments are performed. The model output remains unchanged.

The at least one correction parameter is used to correct the at least one model output. The current or former model output is replaced by the corrected or adjusted model output and provided as output after performed correction.

The at least one adjusted output as at least one corrected model output can be used for controlling the technical unit or the component of the technical unit. The advantage is that the control is based on a corrected model output and hence significantly more reliable.

The present invention hence ensures a safe operation and control of the technical unit.

In a first aspect the method further comprises at least one of the steps:

executing the at least one corrected model output by a controller for controlling the technical unit or the component of the technical unit; wherein

the controller is preferably a high-performance controller; and

transmitting the at least one corrected model output to a controller to execute the at least one corrected model output for controlling the technical unit or the component of the technical unit; wherein
the controller is preferably a high-performance controller.

Accordingly, the controller is preferably the high-performance controller, which can be interpreted in the common sense and which can be abbreviated with HPC. The HPC can be designed as e.g. a path planner, according to which the path planner can compute or recompute e.g. the parameters of a curve-based trajectory of an end effector of an industrial robot arm or autonomous vehicle. The controller is configured for executing the at least one model output, namely the at least one corrected model output or the uncorrected originally provided model output.

Compared to the state-of-the-art solutions, such as simplex architectures ("SAs") and Adaptive Simplex Architectures ("ASAs"), the present invention significantly improves the reliability of the high-performance branch of the controller. This also reduces the use of the high-assurance controller during the useful life of a system asymptotically towards zero. This enables the development of pure machine learning-based controllers of dynamic systems.

In another aspect the at least one control parameter or the at least one motion parameter is a parameter selected from the group comprising: a control law, a control action and a control plan. Accordingly, the parameter aims to control the technical unit or the component of the technical unit, such as the industrial robot arm or the end effector of the industrial robot arm. The parameter can be advantageously selected in a flexible manner depending on the specific use case, application, user requirements, underlying technical units, underlying system or any other conditions.

In another aspect the verification is performed before the at least one model output is released or forwarded for execution. Accordingly, the model output is verified in view of a pass or a fail. After verification, either correcting in case of the fail or maintaining the model output in case of the pass, the model output is released or forwarded for execution. Execution means, referring to the aforementioned example, that the parameters of the curve-based trajectory of the end effector of the industrial robot arm are corrected using the corrected model output and are used for actuation.

In another aspect the at least one model output is represented by at least one parameter of a collision avoiding path, any other path or trajectory in context of the technical unit or the component of the technical unit.

In another aspect the at least one correction parameter is added to at least one parameter of the at least one collision avoiding path, of the at least one other path or of the at least one trajectory during adjustment.

Accordingly, the model output can be flexibly chosen for correction. Referring to the example of a path planner as HPC and a robot arm as technical unit, the model output can be designed as parameters of a motion path or trajectory. The path or trajectory is adjusted.

In a further aspect the method steps b to e. are performed recurrently based on the at least one corrected model output as the model output.

Accordingly, the method steps are performed as follows:

b. Verifying the at least one corrected model output using at least one acceptance test resulting in at least one test verdict regarding a fail or a pass of the at least one corrected model output; wherein
the at least one test verdict comprises at least one indication about whether the at least one corrected model output has passed or failed the at least one acceptance test and at least one indication about a deviation of the at least one corrected model output from at least one expected output;

c. determining at least one correction parameter using a second trained machine learning model based on the at least one test verdict and the at least one corrected model output, if the first trained machine learning model fails the at least one acceptance test;

d. adjusting the at least one corrected model output of the first trained machine learning model by applying the at least one correction parameter on the at least one corrected model output; and

e. providing the at least one adjusted output as at least one corrected model output.

Hence, the latest provided corrected model output in step e. is used as new input for the method steps, verification and correction b. to d.

The steps can be performed N times to correct the model output of the HPC. In the case of repeated failure, a Decision Logic ("DL") can switch control to a high-assurance controller (HAC), whose performance is lower than that of the corrected HPC model output, yet certifiably safe. The number N denotes the number of correction cycles.

The present invention allows to reduce the number of control cycles (i.e. executions of the controller) in which the HAC is used to a significant extent, which asymptotically tends to zero after a sufficiently long system testing and operation duration. This allows for creating simple and inexpensive HACs.

In a further aspect the second machine learning model is a recurrent neural network (e.g., a long short term memory - LSTM - network or a gated relation network - GRN). Accordingly, in the case that the method steps are performed in a recurrent manner, the recurrent neural network have proven to be advantageous in view of an efficient and reliable solution.

A further aspect of the invention is a computer program product directly loadable into an internal memory of a computer, comprising software code portions for performing the aforementioned method steps when said computer program product is running on a computer.

A further aspect of the invention is a technical system comprising a correction module for performing the aforementioned method steps.

A further aspect of the invention is a correction module for determining at least one correction parameter using a second trained machine learning model based on at least one test verdict as result from at least one corresponding acceptance test and at least one model output of a first trained machine learning model, if the first trained machine learning model fails the at least one acceptance test. The correction module can be advantageously employed on any versions of the simplex architecture and/or of the Adaptive Simplex Architecture.

4. Short description of the drawings

In the following detailed description, presently preferred embodiments of the invention are further described with reference to the following figures:

Fig. 1   illustrates a flowchart of the computer-implemented method according to the invention.

Fig. 2   shows a schematic representation of the technical system with the correction module according to an embodiment of the invention.

Fig. 3   shows a schematic representation of the technical system with the correction module and the correction cycle according to an embodiment of the invention.

5. Detailed description of preferred embodiments

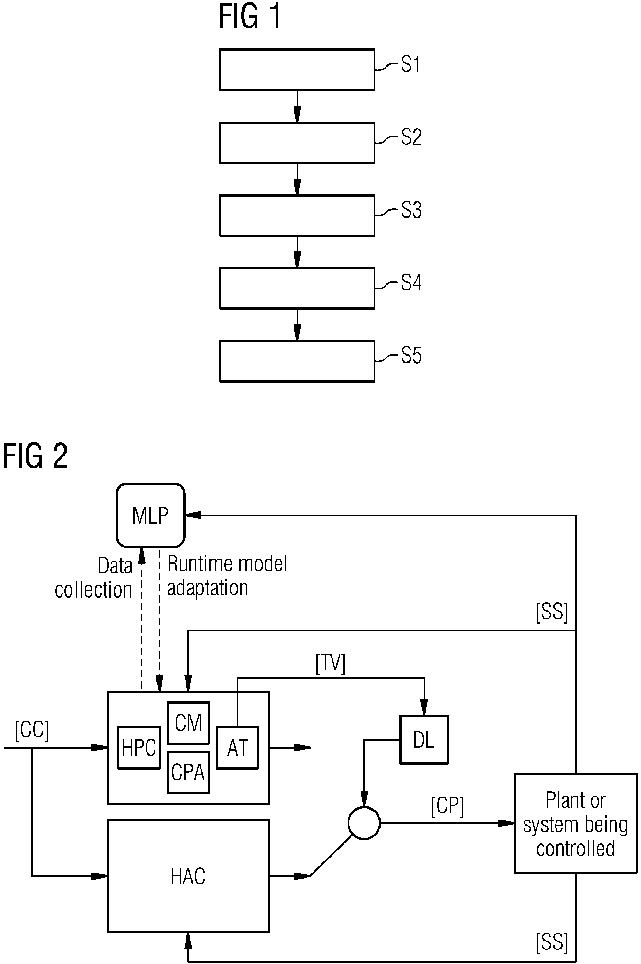

Figure 1 illustrates a flowchart of the method according to the invention with the method steps S1 to S5.

Figure 2 shows the simplex architecture with the correction module according to an embodiment of the invention.

Abbreviations regarding Figure 2:

| | |
|---|---|
| [PI, ...] = | A set containing at least one parameter |
| CC = | Control command |
| TV = | Test verdict |
| CP = | Control plan |
| SS = | System state |
| CPA = | Correction parameter application |
| HPC = | High performance controller |
| HPA = | High assurance controller |
| CM = | Correction model |
| AT = | Acceptance test |
| MLP = | Machine learning platform |

According to this embodiment, a control command (CC) channel is connected to the simplex controller. This command can indicate the setpoint of the simplex controller, which can be the target position of a technical system in motion. The simplex controller can be triggered periodically by a control cycle clock. A control cycle could, for example, be 10 milliseconds long. Every time that the simplex controller is triggered, the control command and system state (SS) is read from the command channel by the High Performance Controller ("HPC"), High-Assurance Controller ("HAC") and/or acceptance test modules. The HPC module uses a machine learning model. The HAC uses a human-engineered and hand-coded controller logic. The HPC is implemented as a trained machine learning model and can therefore also be referred to as HPC model. The acceptance test module uses a human-engineered test logic, which checks whether the output of the HPC model is within the safe region.

The HPC model is scored using a machine learning model scorer. The output of the scoring operation (i.e., the HPC model's prediction) is forwarded to the acceptance test. The output of the HPC model consists of at least one numeric or categorical parameter. The HPC model can thus be a regressor, classifier, or a combination thereof. In the case that the output of the HPC model fails the acceptance test (AT), the correction model (CM) uses the test verdict (TV) of the AT and the HPC output (HPCO) to compute at least one corrective parameter to be applied to the HPC output.

The test verdict can comprise:

a. an indication of whether the model output of the first machine learning model has passed or failed the acceptance test;

b. a quantitative parameter which indicates how far the model output was off the expected safe region; and/or

c. a quantitative parameter describing a quantitative or qualitative property of a physical object (e.g., obstacle, human, cars, etc.) or a condition in the operative context of a technical unit or a component of the technical unit to be controlled by the HPC, which has determined the acceptance test to fail.

In addition, the parameters of the control command that are used for training the correction model are extracted by the acceptance test from the control command and enclosed in the output of the acceptance test, namely the test verdict (TV).

Moreover, further relevant parameters (e.g., the system state - SS), which are required to train the correction model, can be obtained from an external sensor system to which the acceptance test has access.

The correction parameters (CP) determined by the correction model are applied to the model output of the first machine learning model, e.g. added, multiplied, subtracted, etc.

The model output can be represented by a set of parameters describing a collision avoiding path plan or motion plan of an industrial robot or of an autonomous vehicle. In this exemplary case, the correction parameters can be added to the parameters of the path plan (i.e., the HPC output).

After the application of correction parameter, the corrected model output can be used as new model output in a recurrent manner. This recurrent procedure can be equally referred to as correction cycle (CRC).

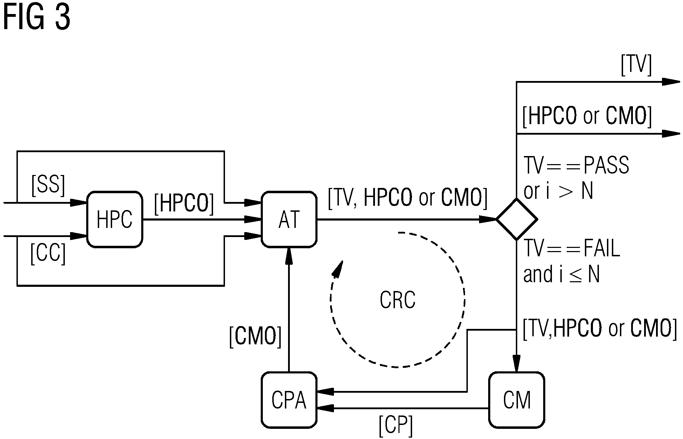

Fig. 3 shows a schematic representation of the technical system with the correction module and the correction cycle according to an embodiment of the invention.

Abbreviations regarding Figure 3:

| | |
|---|---|
| [P1, ...] = | A set containing at least one parameter |
| CC = | Control command |
| TV = | Test verdict |
| CP = | Correction parameters |
| CRC = | Correction cycle |
| HPC = | High performance controller |
| HPCO = | HPC output |
| CMO = | Corrected model output |
| CPA = | Correction parameter application |
| CM = | Correction model |
| AT = | Acceptance test |
| N = | Maximum number of correction cycles |
| i = | Number of executed correction cycles |

The correction cycle can be repeated several times, as specified by the maximum number of correction cycles N. For example, if a control cycle is 10 ms long, and the execution of the acceptance test takes 0.1 ms and the scoring of the CM takes 0.9 ms, the upper bound of N is 10. The correction module is designed and trained in such a way that, given the model output that failed the acceptance test and the test verdict, the corrected model output is pushed back into the safe region within a limited number of correction cycles, e.g. 1-3.

If the number of executed correction cycles, i, exceeds N, the Simplex controller produces the output of the HAC. When no correction cycle is needed because the initial HPC model output passes the acceptance test, the Simplex controller produces the HPC model output. Otherwise, the Simplex controller produces the corrected model output.

Training of the correction model using the model outputs and the output of the acceptance test as input data, and the corrected output as output data

Explanation for why and how the correction model works:

The acceptance test acts like an oracle which generates additional training data for the supervised training of the correction model. Together with the model output, these additional training data facilitate the correction of the model output by training and applying a correction model. The correction model is only trained for the cases in which the first model (i.e., HPC model) fails (e.g., when encountering a new situation). The correction model thus mitigates the problems of (catastrophic) forgetting of the first model and of biased training data.

According to an embodiment, the first machine learning model (HPC) and the second machine learning model (correction model) are trained and/or retrained on a machine learning platform.

The training or retraining of these models can be performed continuously. The machine learning models can be updated and hence also retrained continuously during the operation of the technical unit being controlled.

The training and/or retraining of the two machine learning models are independent of each other.

Therefore, a test mode and an operation mode can be used. In the test mode, both the machine learning models are retrained and thus updated continuously.

For example, in the test mode, the performance statistics of the model output can be as follows:

- The first model output is used in approx. 85% of the cases at the beginning of the testing period and in approx. 98% of the cases towards the end of the testing period.

- The corrected model output is used in approx. 14% of the cases at the beginning of the testing period and in approx. 2% of the cases towards the end of the testing period.

In the operation mode, only the second machine learning model (correction model) is retrained on a machine learning platform (MLP) that is embedded in the technical unit being controlled, whereas the first machine learning model (HPC) is no longer retrained.

The advantage is that the second machine learning model is simpler than the first machine learning model and thus requires less computational resources for training. The second machine learning model design also ensures convergence of the corrected model output towards the safe region within a limited number of correction cycles. For example, this can be guaranteed by the application of incremental correction parameters, which pushes the model output towards the safety region iteratively.

The rational for retraining is that the second machine learning model is adapted to new combinations of model outputs and test verdicts, which were not covered by the training data.

Use case

According to an exemplary use case, a dynamic path planning problem with obstacle avoidance for a six degrees of freedom (6-DOF) manipulator is considered. This problem is also known as collision-free or real-time toolpath planning. This problem is of high importance in human-robot collaboration in manufacturing, for cartesian cranes, for autonomous robots and vehicles etc.

According to this embodiment, the HPC is a path planner, which recomputes the parameters of a curve-based trajectory of the end effector of the industrial robot arm in each correction cycle so that the toolpath avoids any collisions while attempting to minimize the total toolpath length.

The moving obstacle can take arbitrary shapes and be composed of one or more distinct objects. The moving obstacle may be a human or a human body part, a car with a driver or an autonomous vehicle, a robot or a unit of the robot, a fixed or moving object etc.

A 3D sensor generates a point cloud or another representation of the moving obstacle, around which a 3D-bounding box (or bounding volume) that is aligned with the axes of the robot's base coordinate system is computed. The moving obstacle representation (e.g., point cloud) and the bounding box are updated in real time to facilitate collision avoidance through fast path replanning. The position of the moving obstacle must be exactly determined and tracked using the bounding box.

The toolpath (i.e., the path of the end effector) is computed in the robot's base coordinate system with respect to the robot's tool center point. In the case of an autonomous vehicle, the toolpath planning problem is analogous to the vehicle trajectory planning problem.

Given an origin point and a target point, the problem consists of finding a smooth toolpath that avoids a moving obstacle while minimizing the length of that path. To solve this problem, an analytic solution based on the Lame curve is considered. This approach facilitates a simple formulation of the path planning problem as an optimization problem, which can be solved using a machine learning approach.

The Lame curves takes a variety of shapes depending on the a (semi-major axis), b (semi-minor axis), and n (shape) parameters:

$$(x/a)^n + (y/b)^n = 1 \qquad (1)$$

For n=2, the shape of the curve is that of an ellipse. For n=1, the shape of the curve is that of a rhombus. For n>2, the shape of the curve converges to that of a rounded rectangle.

The first equation enables the flexible generation of toolpaths that avoid collisions with at least one obstacle that is contained by a bounding box, which is characterized by two representative points, p1 = (x1', y1') and p2 = (x2', y2'), in a plane defined by the direct path between origin and target, and the vertical (Z) axis in the robot's base coordinate system.

In the second equation, N denotes the number of discrete segments along the elliptical path between the origin and target; and B denotes the set of representative points on the bounding box, B = {p1, p2}, where p1 = (x1', y1') and p2 = (x2', y2').

The path planning problem can thus be formulated as an optimization problem as follows:

$$\min\left(\sum_{i=1}^{N-1}\sqrt{(x'_{i+1} - x'_i)^2 + (y'_{i+1} - y'_i)^2}\right),$$

where $y'_i = b\left(1 - \left|\frac{x'_i}{a}\right|^n\right)^{\frac{1}{n}}$, $x'_{origin} \leq x'_i \leq x'_{target}$ subject to: $\left|\frac{x'}{a}\right|^n + \left|\frac{y'}{b}\right|^n < 1$, $(x',y') \in B$.

As the obstacle moves, the Lame curve parameters a, b and n have to be recomputed in real time so as to minimize the path while avoiding the obstacle. The parameter a can be set to half the length of the direct path between x'origin and x'target. To determine the other two parameters, a combinatorial optimization algorithm can be used.

Given the input set I = (x'$_{origin}$, x'$_{target}$, x'$_1$, y'$_1$, x'$_2$, y'$_2$), which describes the current position of the TCP; the position and size of the obstacle; and the target, an optimal computational solution to the minimization problem can be implemented using a backtracking algorithm, which solves the aforementioned optimization. As an example solution approach, Algorithm 1 iterates through all discrete combinations of the b and n parameters of the Lame curve, which do not violate the inequality and computes the arc length by summing up the distances between N discrete points forming a collision-avoiding Lame-curved path. If Algorithm 1 is executed continuously as the obstacle moves, new Lame curve parameters will be computed at the start of each control cycle. This way, the toolpath will be adapted to the current position and size of the bounding box around the obstacle. Depending on the size, shape, position, and/or orientation of the obstacle, the end effector will transition from one elliptical trajectory to another as it moves towards the target. These trajectories can also be thought of as orbits around the obstacle.

For small increments of b and n (i.e., b_step and n_step), Algorithm 1 produces nearly optimal solutions with respect to the path length and/or albeit at the cost of a high running time. Therefore, the algorithm is run with small increments for b and n only on the machine learning platform to produce training data that can be used to train a machine learning model, which can be used as the HPC in the Simplex architecture.

---

**Algorithm 1: Lamé curve parameter optimization.**

---

**Input:** $x'_1, y'_1, x'_2, y'_2, b\_step, n\_step$

---

**Output:** $b, n$

    $best\_b = -1$, $best\_n = -1$, $best\_arc = 10^4$, $n = 10$

    **do**

        $n = n - n\_step$

        $b = \max(y'_1, y'_2) + 50$

        **do**

            $b = b - b\_step$

            $t = AT(x'_1, y'_1, x'_2, y'_2, b, n)$

            **if** $t < 1$

                $arc = evalArc(b,n)$

                **if** $arc < best\_arc$

                    $best\_arc = arc$

                    $best\_b = b$

                    $best\_n = n$

        **while** $b > \max(y'_1, y'_2)$ **and** $t < 1$

    **while** $n > 1$

    **return** $best\_b, best\_n$

---

Acceptance Test

In the context of this use case, the purpose of the acceptance test (AT) is to decide whether the pair of points $(x'_1, y'_1)$ and $(x'_2, y'_2)$ are inside the Lame curve characterized by the parameters (b, n). This condition guarantees that the robot will avoid any collisions with any obstacle contained within the bounding box, which ensures safety.

The following inequality provides a condition that enables the implementation of an acceptance test:

$$|x' \ / \ a|^n + |y' \ / \ b|^n < 1$$

The input to the AT is represented by the coordinates of the representative points, $(x'_1, y'_1)$ and $(x'_2, y'_2)$, and the parameters (b, n) of the Lame curve being tested. If the first equation holds for a given combination of x' and y', the test verdict is "passed." Otherwise, the test verdict provides the following information:

- A field indicating that the test has failed.
- A quantitative parameter, $T \geq 1$, which reflects the maximum distance between the representative points, $(x'_1, y'_1)$ and $(x'_2, y'_2)$, of the bounding box and the Lame curve, with:

    o $T = \max(T_1, T_2)$, where

    o $T_1 = | (x'_1 - a) / a |^n + | y'_1 / b |^n$

    o $T_2 = | (x'_2 - a) / a |^n + | y'_2 / b |^n$

- The coordinates of the point $(x'_i, y'_i)$, with i = 1 or 2, depending on which of the representative points $(x'_1, y'_1)$ and $(x'_2, y'_2)$ lies outside of the Lame curve. If both points are outside the curve, then the point which is farther away from the curve is returned.

The AT is implemented as a function which takes as inputs the representative points of the bounding box, and the a, b and n parameters of the current Lame curve. The test results a structure containing the information discussed above. If the rest result is "passed," the additional information will be e.g. dropped or it will be collected for performance analysis purposes. The execution time of this AT is very short (e.g., less than 0.01 ms) because it consists of a fixed number of mathematical operations.

The High-Performance Controller (HPC)

Artificial neural networks (ANN) are known to approximate polynomial objective functions accurately. This facilitates the training of ANN models to predict solutions to linear and nonlinear optimization problems using data generated by heuristic or exact human-engineered algorithms designed to solve such problems. Referring to the aforementioned use case, a feedforward ANN can be trained with I = ($x'_{origin}$, $x'_{target}$, $x'_1$, $y'_1$, $x'_2$, $y'_2$) as the input and O = (b, n) as the output to solve the equation from Figure 3. For every input I, the computational algorithm described before (Algorithm 1) can be used to find the best combination of b and n and thus to generate data for training a neural network model, which can be used as HPC.

The Correction Model (CM)

The purpose of the correction model (CM) is to correct the output of the high-performance controller (HPC) whenever it fails the acceptance test (AT). To this end, the CM uses the output of the HPC model and that of the AT. The output of the CM is applied to the output of the HPC model to correct the former. According to this embodiment, the output of the CM consists of two corrective parameters, $b_{diff}$ and $n_{diff}$, which are added to the b and n parameters of the Lame curve, as predicted by the HPC. The corrective parameters, $b_{diff}$ and $n_{diff}$, are positive or negative floating-point numbers. $b_{diff}$ and $n_{diff}$ cannot both be negative at the same time because. This would push the output of the HPC farther outside the safety region. Depending on the situation, the application of the corrective parameters may, for example, increase n while decreasing b (and vice versa); increase both b and n; or increase one of them while leaving the other one unchanged. The correction model can be implemented as a feedforward ANN or a recursive neural network (RNN). The CM is initially trained on the same training data as the HPC as follows. For example, it is assumed that the initially trained HPC yields a failure rate of 17,7% on the training set. This means that out of the 10,000 input sets, 1770 have failed the acceptance test. These 1770 input cases, including the corresponding outputs of the HPC model are selected to form the training set which is used to train the CM. The baseline CM can thus be trained using the following data:

- Input: The output of the acceptance test combined with the parameters (b, n) that led to the failure of the test.

- Output: The differences ($b_{opt}$ - b) and ($n_{opt}$ - n), where $b_{opt}$ and $n_{opt}$ are the parameters characterizing the shortest Lame curve which contains both ($x'_1$, $y'_1$) and ($x'_2$, $y'_2$), as computed by Algorithm 1, which is used to generate training data for the HPC model.

The baseline CM will not be able to correct the outputs of the HPC in all circumstances. Therefore, the CM also needs to be retrained using data collected at runtime. Whereas the HPC is retrained and redeployed in test mode only, the CM is retrained and redeployed in both test and operation mode.

The High Assurance Controller (HAC)

According to an embodiment, a hand-coded HAC can be implemented using Algorithm 1. In order to limit its execution time, the parameters $b_{step}$ and $n_{step}$ in Algorithm 1 must be sufficiently large in order for its execution to fit within the control cycle.

**Claims**

1. Computer-implemented method for correcting at least one model output of a first trained machine learning model, comprising the steps:

   a. Providing the at least one model output of the first trained machine learning model (S1); wherein the first trained machine learning model is configured for determining the at least one model output comprising at least one control parameter or at least one motion parameter for controlling a technical unit or a component of the technical unit;
   b. Verifying the at least one model output using at least one acceptance test resulting in at least one test verdict regarding a fail or a pass of the at least one model output (S2); wherein the at least one test verdict comprises at least one indication about whether the at least one model output has passed or failed the at least one acceptance test and at least one indication about a deviation of the at least one model output from at least one expected output;
   c. determining at least one correction parameter using a second trained machine learning model based on the at least one test verdict and the at least one model output, if the first trained machine learning model fails the at least one acceptance test (S3);
   d. adjusting the at least one model output of the first trained machine learning model by applying the at least one correction parameter on the at least one model output (S4); and
   e. providing the at least one adjusted output as at least one corrected model output (S5).

2. Computer-implemented method according to claim 1, further comprising at least one of the steps:

   executing the at least one corrected model output by a controller for controlling the technical unit or the component of the technical unit; wherein
   the controller is preferably a high-performance controller; and
   transmitting the at least one corrected model output to a controller to execute the at least one corrected model output for controlling the technical unit or the component of the technical unit; wherein
   the controller is preferably a high-performance controller.

3. Computer-implemented method according to claim 1 or claim 2, wherein the at least one control parameter or the at least one motion parameter is a parameter selected from the group comprising: control law, a control action and a control plan.

4. Computer-implemented method according to any of the preceding claims, wherein the verification is performed before the at least one model output is released or forwarded for execution.

5. Computer-implemented method according to any of the preceding claims, wherein the at least one model output is represented by at least one parameter of a collision avoiding path, any other path or trajectory in context of the technical unit or the component of the technical unit.

6. Computer-implemented method according to claim 5,
   wherein the at least one correction parameter is added to at least one parameter of the at least one collision avoiding path, of the at least one other path or of the at least one trajectory during adjustment.

7. Computer-implemented method according to any of the preceding claims,
   performing the method steps b to e. based on the at least one corrected model output as the model output recurrently.

8. Computer-implemented method according to claim 7,
   wherein the second machine learning model is a feedforward or a recurrent neural network, or a long-short term memory network.

9. A computer program product directly loadable into an internal memory of a computer, comprising software code portions for performing the steps according to any of the preceding claims when said computer program product is running on a computer.

10. A technical system comprising a correction module for determining at least one correction parameter, configured for performing the steps according any of the claims 1 to 8.

11. Correction module for determining at least one correction parameter using a second trained machine learning model based on at least one test verdict as result from at least one corresponding acceptance test and at least one model output of a first trained machine learning model, if the first trained machine learning model fails the at least one acceptance test.

## FIG 1

S1

S2

S3

S4

S5

## FIG 2

MLP

Data collection

Runtime model adaptation

[SS]

[TV]

[CC]

CM

HPC

CPA

AT

DL

[CP]

Plant or system being controlled

HAC

[SS]

# FIG 3

Europäisches
Patentamt

European
Patent Office

Office européen
des brevets

**EUROPEAN SEARCH REPORT**

Application Number

EP 22 15 0208

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/189573 A1 (KING ANDREW LEWIS [US] ET AL) 18 June 2020 (2020-06-18) * paragraph [0022] - paragraph [0177]; figures 1-8 * | 1-11 | INV. G06N3/08 B60W60/00 G05B13/02 G06N3/04 |
| A | US 2020/324794 A1 (MA GUIXIANG [US] ET AL) 15 October 2020 (2020-10-15) * paragraph [0020] - paragraph [0024]; figure 2 * * paragraph [0036] - paragraph [0039]; figure 5 * | 8 | |
| A | KANATA SUZUKI ET AL: "Undefined-behavior guarantee by switching to model-based controller according to the embedded dynamics in Recurrent Neural Network", ARXIV.ORG, CORNELL UNIVERSITY LIBRARY, 201 OLIN LIBRARY CORNELL UNIVERSITY ITHACA, NY 14853, 10 March 2020 (2020-03-10), XP081618594, * Section III. Method * | 1-11 | |

TECHNICAL FIELDS
SEARCHED (IPC)

G06N
G05B
B60W

The present search report has been drawn up for all claims

| Place of search | Date of completion of the search | Examiner |
|---|---|---|
| The Hague | 4 July 2022 | Jacobs, Jan-Pieter |

EPO FORM 1503 03.82 (P04C01)

## ANNEX TO THE EUROPEAN SEARCH REPORT
## ON EUROPEAN PATENT APPLICATION NO.

EP 22 15 0208

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2022

| Patent document cited in search report | | Publication date | Patent family member(s) | | Publication date |
|---|---|---|---|---|---|
| US 2020189573 | A1 | 18-06-2020 | CN | 113348462 A | 03-09-2021 |
| | | | EP | 3895062 A1 | 20-10-2021 |
| | | | JP | 2022513808 A | 09-02-2022 |
| | | | US | 2020189573 A1 | 18-06-2020 |
| | | | US | 2022055616 A1 | 24-02-2022 |
| | | | WO | 2020123347 A1 | 18-06-2020 |
| US 2020324794 | A1 | 15-10-2020 | BR | 102021001832 A2 | 04-01-2022 |
| | | | CN | 113850363 A | 28-12-2021 |
| | | | DE | 102020132559 A1 | 30-12-2021 |
| | | | US | 2020324794 A1 | 15-10-2020 |

EPO FORM P0459

For more details about this annex : see Official Journal of the European Patent Office, No. 12/82